# EUROPÄISCHE PATENTSCHRIFT

(11) **EP 4 344 785 B1**
(45) Veröffentlichungstag und Bekanntmachung des Hinweises auf die Patenterteilung: **30.09.2026**
(21) Anmeldenummer: 23194023.0
(22) Anmeldetag: 29.08.2023
(51) Int. Cl.: B02C 21/02

(54) **PROZESSIERVORRICHTUNG**
PROCESSING DEVICE
DISPOSITIF DE TRAITEMENT

(30) Priorität: 29.09.2022 AT 507522022
(43) Veröffentlichungstag der Anmeldung: 03.04.2024
(73) Patentinhaber: SBM Mineral Processing GmbH, 4664 Oberweis (AT)
(72) Erfinder: DANNER, Christopher, 8786 Rottenmann (AT); SALLFELLNER, Othmar, 8913 Admont (AT); SCHEIBNER, Siegfried, 8942 Wörschach (AT)
(74) Vertreter: Torggler & Hofmann Patentanwälte - Innsbruck

(56) Entgegenhaltungen:
- EP-A1- 2 100 701
- EP-A1- 3 988 215
- EP-B1- 3 768 621
- WO-A1-2008/010322
- GB-A- 2 351 719
- US-A1- 2016 096 554

## Beschreibung

Die vorliegende Erfindung betrifft eine bewegbare Prozessiervorrichtung zur Prozessierung von Aufgabematerialien, insbesondere mineralischen Materialien, gemäß dem Oberbegriff des Anspruchs 1.

Prozessiervorrichtung können zur Prozessierung von Aufgabematerialien, insbesondere mineralischen Materialien, beispielsweise als Zerkleinerungsanlagen, Brechanlagen, Siebvorrichtungen, Klassiermaschinen oder der ähnlichen ausgebildet sein. Im Folgenden wird der Stand der Technik anhand einer Zerkleinerungsanlagen erläutert werden. In allgemeiner Weise gilt entsprechendes analog für Prozessiervorrichtungen.

Entsprechende Zerkleinerungsanlagen zur Zerkleinerung von Aufgabematerialien, insbesondere mineralischen Materialien, werden dazu eingesetzt, stückiges Zerkleinerungsmaterial - beispielsweise Erze (Eisenerz, Brauneisenerz, Kupfererz, Golderz), Gesteine (Granit, Felsgesteine, Gipsgesteine, Zerpentingestein, Kalkgestein), Steinkohle, Ölschiefer, Mergel, Schlacke, Beton, Glas, Gipskartonplatten oder ähnliches - auf eine gewünschte, vorgegebene Korngröße zu reduzieren.

Gattungsgemäße, bewegbare Zerkleinerungsanlagen zur Zerkleinerung von Aufgabematerialien umfassen einen Vorrichtungsrahmen, welcher Vorrichtungsrahmen wenigstens eine Brechanlage zur Zerkleinerung der Aufgabematerialien trägt und wenigstens eine Trägervorrichtung, welche wenigstens eine Trägervorrichtung wenigstens eine Anbaukomponente mit dem Vorrichtungsrahmen schwenkbar verbindet.

Der Vorrichtungsrahmen ist dabei zumeist mit einem Transportmittel verbunden, insbesondere mit einem Raupenantrieb, welches dazu ausgebildet ist, die bewegbare Zerkleinerungsanlage dem Einsatzgebiet zuzuführen, je nach Abbau und Zerkleinerungsverlauf an sich ändernde Umgebungsbedingungen anzupassen oder diese Zerkleinerungsanlage über geringere Distanzen zu bewegen.

Jedoch ist es oft der Fall, dass zwischen den verschiedenen Einsatzgebieten der bewegbaren Zerkleinerungsanlage die Zerkleinerungsanlage unter Zuhilfenahme weiterer Transportmittel über weitere Distanzen bewegt werden muss. So wird diese zumeist über Sondertransporte, Tieflader oder ähnliches über öffentliche Verkehrswege einem anderen Einsatzgebiet übergeführt.

Bei einem solchen Transport ist es erforderlich, die Zerkleinerungsanlage, welche größere Dimensionen aufweist, möglichst kompakt konfigurieren zu können, sodass sich der Transport über die öffentlichen Verkehrswege ermöglicht.

Um einen solchen Transport ermöglichen zu können, ohne die bewegbare Zerkleinerungsanlage in einzelne Baugruppen oder Bauteile zerlegen zu müssen, ist es bekannt, einzelne Anbaukomponenten, wie beispielsweise Förderbänder, an oder in die Zerkleinerungsanlage ein- oder heranzuschwenken.

Aus dem Stand der Technik bekannte Ausführungsformen gehen aus der GB 2 351 719 A, der EP 3 988 215 A1, der WO 2008/010322 A1, der US 2016/096554 A1 oder der EP 3 768 621 B1 hervor.

So ist es beispielsweise bekannt, wie aus der EP 1 615 723 B1 oder der EP 2 977 107 B1 gezeigt ist, Fördervorrichtungen - wie Förderbänder - schwenkbar an der Zerkleinerungsanlage anzuordnen, wobei diese Anbaukomponenten an einem Anlenkpunkt, welcher auch die Schwenkachse darstellt, mit der Zerkleinerungsanlage verbunden wird und zumeist über hydraulische Kolben-Zylinder-Einheiten gegenüber dieser verschwenkbar ist, sodass die Anbaukomponente je nach Einsatzgebiet an das Einsatzgebiet angepasst werden kann und zum Transport in eine Stellung an die Zerkleinerungsanlage oder unter die Zerkleinerungsanlage verschwenkt werden kann.

Eine andere Möglichkeit, welche durch den Stand der Technik bekannt ist, geht beispielsweise aus der EP 1 628 896 B1 hervor, wobei ein Förderband einer Zerkleinerungsanlage in sich geklappt werden kann und somit für einen Transport in eine komprimierte Stellung gebracht werden kann, wodurch es eine kleinere äußere Abmessung aufweist.

Nachteilig daran ist jedoch, dass Anbaukomponenten, wie beispielsweise Förderbänder, vor allem beim Einsatz bei Zerkleinerungsanlagen erhöhten Beanspruchungen ausgesetzt sind, wobei des Öfteren Schlagbeanspruchungen oder Überlasten durch hohe Gewichtskräfte auf die Anbaukomponenten ausgeübt werden, wodurch die Anbaukomponenten hohe Widerstandskräfte aufbringen müssen, um Beschädigungen zu vermeiden.

Vor allem bei Ausgestaltungen mit mehreren Antrieben und Kipppunkten, um die Anbaukomponente in sich zu verkippen, entsteht werden Angriffspunkte für Beschädigungen bei Überlastbeanspruchungen gebildet.

Andererseits wird auch durch eine solche Ausgestaltung ein hoher Kostenfaktor durch hohe Fertigungsaufwände und Wartungsaufwände generiert.

Andererseits bilden sich auch Grenzen für die einfache Verschwenkung an einem Lagerpunkt der Anbaukomponente, da durch die zunehmende Vergrößerung der Zerkleinerungsanlagen auch durch dieses Vorgehen keine ausreichende Verkleinerung der Zerkleinerungsanlage für einen Transport mehr umgesetzt werden kann.

Andere Anbaukomponenten, wie beispielsweise Trennvorrichtungen und/oder Magnetabscheider, hingegen müssen für den Transport von der Zerkleinerungsanlage demontiert werden und separat zur Zerkleinerungsanlage transportiert werden, sodass die Abmessungen der Zerkleinerungsanlage auch für den Transport zulässig wind.

Aufgabe der vorliegenden Erfindung ist es, eine gegenüber dem Stand der Technik zumindest teilweise verbesserte und/oder kostengünstigere und/oder wartungsfreundlichere Ausgestaltung einer bewegbaren Prozessiervorrichtung bereitzustellen und/oder eine bewegbare Prozessiervorrichtung bereitzustellen, bei welcher Anbaukomponenten gegenüber einem Vorrichtungsrahmen effizienter und platzsparender gelagert oder angelenkt werden können.

Diese Aufgabe wird durch eine bewegbare Prozessiervorrichtung zum Prozessieren von Aufgabematerialien, insbesondere mineralischen Materialien, mit den Merkmalen des Anspruchs 1 gelöst.

Erfindungsgemäß ist es vorgesehen, dass die bewegbare Prozessiervorrichtung zur Prozessierung von Aufgabematerialien (insbesondere mineralischen Materialien) einen Vorrichtungsrahmen und wenigstens eine Trägervorrichtung, welche wenigstens eine Trägervorrichtung wenigstens eine als Vorabscheider-Fördereinheit, Abwurffördereinheit oder Trennvorrichtung ausgebildete Anbaukomponente mit dem Vorrichtungsrahmen schwenkbar verbindet, umfasst, wobei die wenigstens eine Trägervorrichtung wenigstens zwei Trägerelemente aufweist, welche Trägerelemente an zwei separaten ersten Anlenkpunkten mit dem Vorrichtungsrahmen verbunden sind und an zwei separaten zweiten Anlenkpunkten mit der wenigstens einen Anbaukomponente verbunden sind, wobei durch die wenigstens eine Trägervorrichtung die wenigstens eine Anbaukomponente relativ zum Vorrichtungsrahmen durch verschwenken der wenigstens zwei Trägerelemente mindestens in einem Bereich von 90° quer zu einer Längsachse der wenigstens einen Anbaukomponente verschwenkbar ist. Durch Vorsehen von wenigstens zwei Trägerelementen, welche an zwei separaten Anlenkpunkten anlenken, kann eine Anbaukomponente dermaßen am Vorrichtungsrahmen angelenkt werden, dass sich ein Drehpunkt der Anbaukomponente relativ zum Vorrichtungsrahmen kinematisch verschieben lässt, sodass in einer effizienteren, platzsparenden Weise die Anbaukomponente zum Vorrichtungsrahmen verdreh- und verschwenkbar ist.

So kann beispielsweise eine bisher durch einen Lagerpunkt fixe Drehachse der Anbaukomponente nun durch das Vorsehen wenigstens zweier Trägerelemente und zwei separaten Anlenkpunkten in die Anbaukomponente verschoben werden, wobei es - sofern die zwei Trägerelemente, der Vorrichtungsrahmen und die Anbaukomponente bevorzugt ein Gelenkviereck bilden - zu einer nicht konstanten Drehachse oder einem Drehpunkt kommt, wodurch es zu gewünschten Verdrehungen und Verschiebungen der Anbaukomponente relativ zum Vorrichtungsrahmen führt.

Anders ausgedrückt, kann durch die Erfindung eine Anbaukomponente nicht nur gegenüber einem Vorrichtungsrahmen verschwenkt werden, sondern es kann eine Dreh-Schub-Bewegung der Anbaukomponente relativ zum Vorrichtungsrahmen ausgeführt werden.

Eine Anbaukomponente kann durch eine Dreh- und Verschiebebewegung an einem Vorrichtungsrahmen in eine platzsparendere Transportposition übergeführt werden.

Durch diese neu geschaffene Möglichkeit der Dreh-Schub-Bewegung der Anbaukomponente relativ zum Vorrichtungsrahmen kann des Weiteren die Anbaukomponente freier gegenüber dem Vorrichtungsrahmen bewegt werden, wodurch auch während des Einsatzes der Prozessiervorrichtung durch eine Relativbewegung der Anbaukomponente relativ zum Vorrichtungsrahmen individueller auf Umgebungsbedingungen und Einsatzgebiete eingegangen werden kann.

Weiters bildet die Anbindung der Anbaukomponente am Vorrichtungsrahmen über zwei separate Anlenkpunkte und zwei Trägerelemente eine sehr stabile Trägervorrichtung der Anbaukomponente, welche auch im Einsatz der Prozessiervorrichtung bei Auftreten von Überlasten und einwirkenden äußeren Schlagbelastungen die Anbaukomponente sicher gegenüber dem Vorrichtungsrahmen trägt.

Es kann vorgesehen sein, dass eine erfindungsgemäße Vorrichtung ihren Einsatz bei bekannten Ausführungsvarianten des Standes der Technik - wie beispielsweise in der Beschreibungseinleitung beschrieben - findet und/oder bei entsprechenden Ausgestaltungen nachträglich installiert wird.

In besonders bevorzugten Ausführungsformen können die Trägerelemente an zwei separaten ersten Anlenkpunkten mit dem Vorrichtungsrahmen verbunden sein und an zwei separaten zweiten Anlenkpunkten mit der wenigstens einen Anbaukomponente verbunden sein. Die erwähnte Dreh-Schub-Bewegung lässt sich auf diese Art und Weise besonders einfach realisieren.

Prozessiervorrichtung können zur Prozessierung von Aufgabematerialien, insbesondere mineralischen Materialien, beispielsweise als Zerkleinerungsanlagen, Brechanlagen, Siebvorrichtungen, Klassiermaschinen oder der ähnlichen ausgebildet sein.

Vorteilhafte Ausführungsformen der Erfindung sind anhand der abhängigen Ansprüche definiert.

Vorzugsweise kann vorgesehen sein, dass die wenigstens zwei Trägerelemente als, vorzugsweise einstückige, Verbindungsstangen ausgebildet sind.

Besonders bevorzugt kann vorgesehen sein, dass die wenigstens zwei Trägerelemente einen rohrförmigen, beispielsweise rechteckigen, Querschnitt aufweisen.

Andere Querschnittsformen, wie beispielsweise kreisrund, oval, elliptisch oder allgemein polygonal, sind aber durchaus auch denkbar.

Es kann vorgesehen sein, dass die zwei separaten ersten Anlegepunkte als Drehpunkte, vorzugsweise Drehlager des Vorrichtungsrahmens, ausgebildet sind und/oder die zwei separaten zweiten Anlenkpunkte als Drehpunkte, vorzugsweise Drehlager der wenigstens einen Anbaukomponente, ausgebildet sind.

Die erwähnten Drehlager könnten aber auch als Drehlager der Trägerelemente aufgefasst werden.

Vorzugsweise kann vorgesehen sein, dass durch die wenigstens zwei Trägerelemente, die wenigstens eine Anbaukomponente und der Vorrichtungsrahmen ein Gelenkviereck gebildet ist.

Es kann vorgesehen sein, dass die Trägervorrichtung wenigstens einen Antrieb aufweist, welcher dazu ausgebildet ist, eine der wenigstens zwei Trägerelemente gegenüber dem Vorrichtungsrahmen zu verschwenken.

Vorzugsweise kann vorgesehen sein, dass der wenigstens eine Antrieb, beispielsweise eine hydraulische, Kolben-Zylinder-Einheit aufweist.

Es kann vorgesehen sein, dass jeweils wenigstens eine Kolben-Zylinder-Einheit für jedes der wenigstens zwei Trägerelemente vorgesehen ist.

Vorzugsweise kann vorgesehen sein, dass der wenigstens eine Antrieb einerseits am Vorrichtungsrahmen und andererseits an zumindest einem der wenigstens zwei Trägerelemente angelenkt ist.

Es kann vorgesehen sein, dass die wenigstens zwei ersten Anlenkpunkte und/oder die wenigstens zwei zweiten Anlenkpunkte als Lagerpunkte ausgebildet sind, welche eine Rotation um den Lagerpunkt zulassen, jedoch eine Linearverschiebung der Trägerelemente gegenüber der Anlenkpunkte verhindern.

Es kann vorgesehen sein, dass die wenigstens zwei ersten Anlenkpunkte und/oder die wenigstens zwei zweiten Anlenkpunkte als Festlager ausgebildet sind.

Es kann vorgesehen sein, dass durch die wenigstens eine Trägervorrichtung die wenigstens eine Anbaukomponente relativ zum Vorrichtungsrahmen durch Verschwenken der wenigstens zwei Trägerelemente mindestens in einem Bereich von 120°, vorzugsweise 180°, quer zur Längsachse der wenigstens einen Anbaukomponente verschwenkbar ist.

Es kann vorgesehen sein, dass wenigstens eine Arretiervorrichtung, vorzugsweise ein Sperrbolzen, vorgesehen ist, welche dazu ausgebildet ist, die wenigstens eine Anbaukomponente in wenigstens einer Relativposition, vorzugsweise einer Transportposition, relativ zum Vorrichtungsrahmen zu arretieren.

Es kann vorgesehen sein, dass die Anbaukomponente durch ein Verschwenken der Trägerelemente relativ zum Vorrichtungsrahmen zwischen unterschiedlichen Betriebsposition und/oder zumindest einer Transportposition bewegbar ist.

Vorzugsweise kann vorgesehen sein, dass die wenigstens eine Anbaukomponente eine Anlenkvorrichtung, vorzugsweise umfassend ein U-förmig ausgebildetes Befestigungselement, aufweist, welche Anlenkvorrichtung mit der Anbaukomponente verbunden ist und die zwei ersten Anlenkpunkte aufweist.

Es kann vorgesehen sein, dass die Prozessiermaschine als Zerkleinerungsanlage zur Zerkleinerung von Aufgabematerialien, insbesondere mineralischen Materialien, ausgebildet ist und der Vorrichtungsrahmen wenigstens eine Brechanlage zur Zerkleinerung der Aufgabematerialien trägt.

Mit der Zerkleinerung von Aufgabematerialien, insbesondere mineralischen Materialien, durch die Brechanlage, kann ein Brechen, Scheiden oder Abtragen eines Ausgangsmaterials verstanden werden, welches zu kleineren Teilstücken des Ausgangsmaterials führt.

Vorzugsweise kann vorgesehen sein, dass die wenigstens eine Brechanlage zur Zerkleinerung von Aufgabematerialien, inbesondere mineralischen Materialien, einen vom Vorrichtungsrahmen getragenen oder mit diesem verbundenen Backenbracher, Hammerbrecher und/oder einen Prallbrecher aufweist. Alternativ oder zusätzlich kann auch ein Walzenbrecher, ein Kegelbrecher oder ein Kreiselbrecher zum Einsatz kommen.

Es kann vorgesehen sein, dass die wenigstens eine als Vorabscheider-Fördereinheit oder Abwurffördereinheit ausgebildete Anbaukomponente, insbesondere einer Zerkleinerungsanlage, ein Förderband aufweist.

Vorzugsweise kann vorgesehen sein, dass die Trägervorrichtung und vorzugsweise zumindest teilweise die Abwurffördereinheit oder Vorabscheiderfördereinheit unterhalb eines Beschickungsbehälters, insbesondre einer Zerkleinerungsanlage, angeordnet ist.

Als "unterhalb eines Bauteils angeordnet" ist im Zuge des vorliegenden Dokumentes dermaßen zu verstehen, dass in einer Betriebsposition oder einer Transportposition der Prozessiervorrichtung in einer projizierenden Draufsicht der Prozessiervorrichtung das entsprechende Bauteil unterhalb des oberhalb angeordneten erwähnten Bauteils zumindest teilweise vom oberen Bauteil verdeckt wird.

Es kann beispielsweise vorgesehen sein, dass die Vorabscheiderfördereinheit dermaßen unterhalb eines Beschickungsbehälters angeordnet ist, dass bereits vor Zuführen eines Aufgabematerials, insesondere eines mineralischen Materials, in die Brechanlage eine Vorabscheidung vorgenommen werden kann, welche beispielsweise unter Nutzung der Schwerkraft der Vorabscheiderfördereinheit zugeführt werden kann, welche die vorabgeschiedenen Aufgabematerialien einer weiteren Verarbeitung zuführt oder aus der Prozessiervorrichtung abführt.

Durch entsprechendes Anbringen der Vorabscheiderfördereinheit und/oder einer Abwurffördereinheit unterhalb eines Beschickungsbehälters der Prozessiervorrichtung über wenigstens zwei Trägerelemente und zwei separaten Anlenkpunkte kann die Abwurffördereinheit oder Vorabscheiderfördereinheit je nach Einsatzgebiet verschwenkt werden und eine Materialförderung an einen gewünschten, frei wählbaren Punkt umgebend an die Prozessiervorrichtung vornehmen, wobei für einen Transport der Prozessiervorrichtung die Vorabscheiderfördereinheit oder Abwurffördereinheit in eine Transportposition übergeführt werden kann, wobei diese maximal durch den Beschickungsbehälter abgedeckt wird, wodurch eine äußerer Größe der Prozessiervorrichtung minimiert wird.

Es kann vorgesehen sein, dass die wenigstens eine als Trennvorrichtung ausgebildete Anbaukomponente einen Magnet aufweist.

Eine Trennvorrichtung kann vorzugsweise dazu ausgebildet sein, metallische Werkstoffe aus dem zu zerkleinernden Material und/oder dem zerkleinerten Material abzutrennen und/oder zu separieren.

Vorzugsweise kann dabei vorgesehen sein, dass die Trennvorrichtung in einem Betriebszustand der Prozessiervorrichtung, vorzugsweise einer Zerkleinerungsanlage, oberhalb einer Fördervorrichtung für zu zerkleinerndes Material und/oder zerkleinertes Material angeordnet ist.

Durch das Anlenken einer Trennvorrichtung über zwei Trägerelemente kann die Trennvorrichtung nicht nur zwischen einer Betriebsposition und einer Transportposition verschwenkt werden, ohne dass es weiterhin nötig ist, die Trennvorrichtung extra für den Transport zu demontieren, sondern es kann die Trennvorrichtung auch durch eine Relativbewegung zum Vorrichtungsrahmen auf spezifische Einsatzbedingungen angepasst werden.

Es kann beispielsweise bei der Anordnung der Trennvorrichtung oberhalb eines Förderbands (beispielsweise eines Magneten zur Abtrennung metallischer Verunreinigungen aus einem zerkleinerten Material) vorgesehen sein, dass die Trennvorrichtung zum Absondern der Verunreinigungen dermaßen relativ zum Vorrichtungsrahmen bewegt wird, dass eine Position abseits des Förderbands eingenommen wird (wobei beispielsweise der Magnet zum Abwurf der metallischer Verunreinigungen abgeschaltet oder umgepolt werden kann und die metallischen Verunreinigungen durch Nutzung der Schwerkraft vom Magnet neben die Prozessiervorrichtung oder die Zerkleinerungsanlage abfallen).

Es kann vorgesehen sein, dass wenigstens eine Absenkvorrichtung vorgesehen ist, welche dazu ausgebildet ist, die Anbaukomponente, insbesondere die Trennvorrichtung und/oder den Magneten, gegenüber dem Vorrichtungsrahmen abzusenken und/oder an den Vorrichtungsrahmen anzunähern und/oder an den Vorrichtungsrahmen anzulegen.

Durch eine entsprechende Absenkvorrichtung kann es vorteilhafterweise vorgesehen sein, dass die die Anbaukomponente, insbesondere die Trennvorrichtung und/oder den Magneten, nicht nur für einen Transport relativ gegenüber dem Vorrichtungsrahmen in eine Transpostposition verschwenkt wird, sondern auch in dieser Transpostposition dermaßen an den Vorrichtungsrahmen angenähert und/oder abgesenkt wird, dass die äußere Kontur der Prozessiervorrichtung, vorzugsweise der Zerkleinerungsanlage, möglichst kompakt verkleinert wird.

Weiters kann die Absenkvorrichtung nicht nur dazu genutzt werden die Anbaukomponente zwischen einer Transportstellung und einer Betriebsstellung zu bewegen, sondern auch eine Betriebsposition, vorzugsweise individuell je nach Einsatz, anzupassen, wobei beispielsweise eine Trennvorrichtung und/oder ein Magnet in Betriebsstellung mit seiner/m Abstand gegenüber einem Förderband eingestellt werden könnte.

Weitere Einzelheiten und Vorteile der vorliegenden Erfindung werden im Folgenden anhand der Figurenbeschreibung unter Bezugnahme auf die in den Figuren dargestellten Ausführungsbeispiele näher erläutert. Dabei zeigt:
- Fig. 1: eine mobile Prozessiervorrichtung,
- Fig. 2: eine Vorabscheiderfördereinheit,
- Fig. 3a-3d: verschiedene Schwenkpositionen der Vorabscheiderfördereinheit aus Fig. 2,
- Fig. 4a-4f: eine Trennvorrichtung, und
- Fig. 5: einen abgesenkten Transportzustand einer mobilen Prozessiervorrichtung.

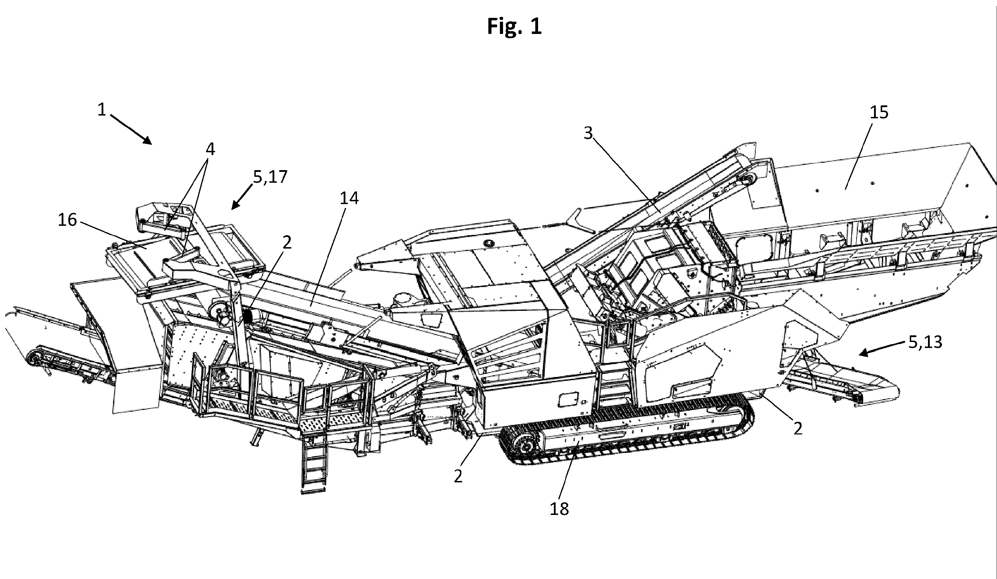

Fig. 1 zeigt eine mobile Prozessiervorrichtung in einer Arbeitsposition, welche in diesem Ausführungsbeispiel als Zerkleinerungsanlage 1 ausgebildet ist.

Die mobile Zerkleinerungsanlage 1 weist dabei einen die einzelnen Bauteile verbindenden Vorrichtungsrahmen 2 auf, welcher gegenüber einem Untergrund über ein Raupenfahrwerk 18 gelagert ist und mit Hilfe des Raupenfahrwerks 18 bewegbar ist.

Zur Zerkleinerung eines Aufgabematerials, insbesondere eines mineralischen Materials, kann ein Aufgabematerial der Zerkleinerungsanlage 1 über den Beschickungsbehälter 15 zugeführt werden, in welchem Beschickungsbehälter 15 das Aufgabematerialbeispielsweise über Radlader oder Bagger eingeführt werden kann.

Aus dem Beschickungsbehälter 15 wird das Aufgabematerial der hier als Prallbrecher ausgebildeten Brechanlage 3 zugeführt, wobei das Aufgabematerialdurch die Brechanlage 3 auf eine gewünschte Größe zerkleinert werden kann.

Nach Durchlauf und Zerkleinerung des Aufgabematerials wird dieser über die Abwurffördereinheit 14 abgeführt.

Vor der Zerkleinerung des Aufgabematerials aus dem Beschickungsbehälter 15 wird eine Vorabscheidung durchgeführt.

Diese Vorabscheidung kann beispielsweise durch ein Sieb erfolgen, durch welches bereits kleine Partikel oder kleines Materialgut des Aufgabematerials abfallen kann und über die Vorabscheiderfördereinheit 13 aus der Zerkleinerungsanlage 1 abgeführt werden kann.

Nach Zerkleinerung des Aufgabematerials kann an der Abwurffördereinheit 14 eine Trennvorrichtung 17 vorgesehen sein, um beispielsweise metallische Werkstoffe aus dem zerkleinerten, Material abzutrennen.

In diesem Ausführungsbeispiel der Zerkleinerungsanlage 1 ist diese Trennvorrichtung 17 als Magnet 16 ausgebildet, welche über der Abwurffördereinheit 14 angeordnet ist und durch Magnetisierung des Magneten 16 aus dem zerkleinerten Material metallische Werkstoffe absondert.

Die hier dargestellten Anbaukomponenten 5 (Vorabscheiderfördereinheit 13 und Trennvorrichtung 17) sind gemäß einem Ausführungsbeispiel der Erfindung jeweils über eine entsprechende Trägervorrichtung 4 mit dem Vorrichtungsrahmen 2 der Zerkleinerungsanlage 1 verbunden.

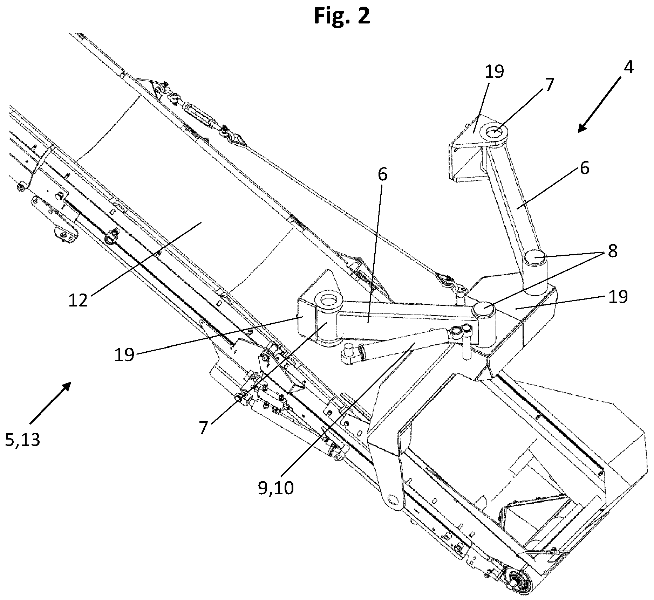

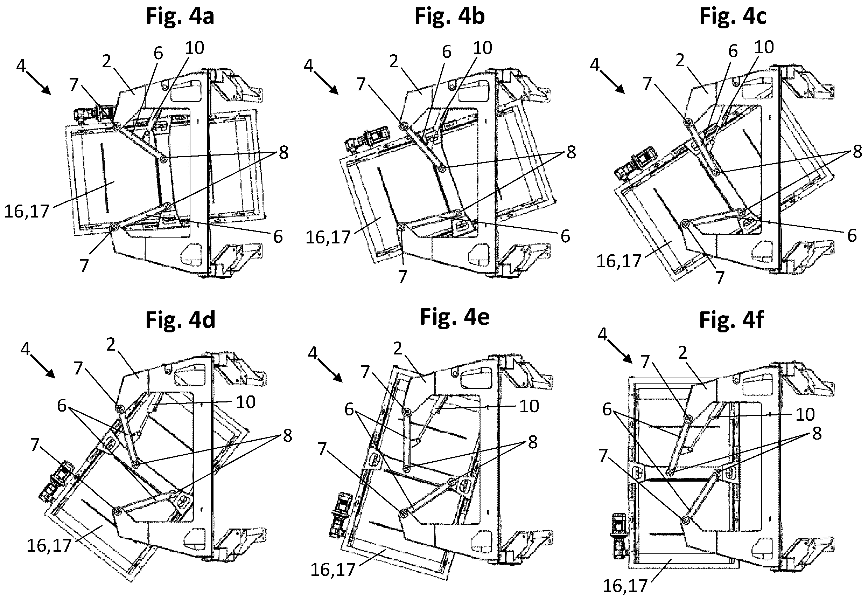

Hinsichtlich dieser Verbindung über eine Trägervorrichtung 4 mit dem Vorrichtungsrahmen 2 wird bezüglich der Trennvorrichtung 17 auf die Figuren 4a, 4b verwiesen und bezüglich der Vorabscheiderfördereinheit 13 auf die Figuren 2 bis 3d.

Fig. 2 zeigt ein erstes Ausführungsbeispiel einer Anbringung einer Anbaukomponente 5 an einen Vorrichtungsrahmen 2 einer Zerkleinerungsanlage 1, wobei in diesem Ausführungsbeispiel die Anbaukomponente 5 als Vorabscheiderfördereinheit 13 umgesetzt ist.

Diese Vorabscheiderfördereinheit 13 weist ein Förderband 12 auf und eine das Förderband 12 tragende Anlenkvorrichtung 11.

Diese Anlenkvorrichtung 11 ist mit dem Förderband 12 über Drehpunkte verbunden, welche eine gewünschte Verkippung des Förderbandes 12 gegenüber der Anlenkvorrichtung 11 gestatten.

Die Anlenkvorrichtung 11 der Vorabscheiderfördereinheit 13 weist zwei zweite Anlenkpunkte 8 auf, an welchen die Trägerelemente 6 einerseits angreifen.

Andererseits sind die Trägerelemente an zwei separaten ersten Anlenkpunkten 7 über die Rahmenlagerelemente 19 mit dem Vorrichtungsrahmen 2 (welcher Vorrichtungsrahmen 2 in dieser Ansicht aus Gründen der Übersichtlichkeit nicht dargestellt ist) verbunden.

Die Rahmenlagerelemente 19 können mit dem Vorrichtungsrahmen 2 beispielsweise über Schraubenverbindungen oder auch durch eine Schweißverbindung verbunden sein.

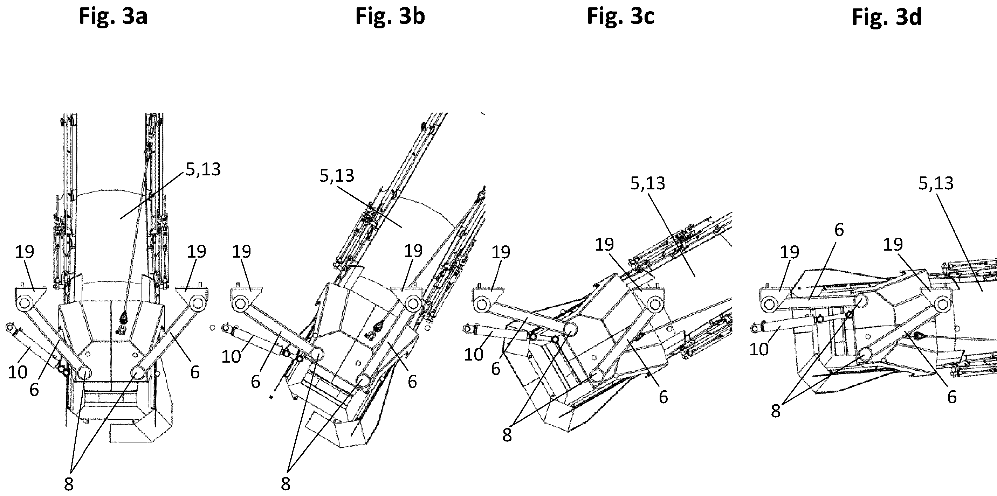

Durch die Lagerung der Vorabscheiderfördereinheit 13 über die zwei Trägerelemente 6 an den Rahmenlagerelementen 19 und somit dem Vorrichtungsrahmen 2 wird eine Verdrehung und Verschiebung der Vorabscheiderfördereinheit 13 gegenüber dem Vorrichtungsrahmen 2 gestattet, wie beispielsweise durch die Figuren 3a bis 3d verdeutlicht wird.

Die ersten Anlenkpunkte 7 und die zweiten Anlenkpunkte 8 dieses Ausführungsbeispiels sind dabei als Drehlager ausgebildet.

Eine Verschwenkung und Verdrehung der Vorabscheiderfördereinheit 13 gegenüber dem Vorrichtungsrahmen 2 kann über den Antrieb 9, welcher als Kolben-Zylinder-Einheit 10 ausgebildet ist, gesteuert oder geregelt werden.

Wie durch die Figuren 3a bis 3d ersichtlich ist, kann eine solche Verschwenkung der Vorabscheiderfördereinheit 13 gegenüber dem Vorrichtungsrahmen 2 durch ein Ausfahren der Kolben-Zylinder-Einheit 10 umgesetzt werden, wobei durch die Figuren 3a bis 3d eine Verkippung um 90° dargestellt ist.

Die Figuren 4a bis 4f zeigen eine weitere erfindungsgemäße Anbindung einer Anbaukomponente 5 am Vorrichtungsrahmen 2 über eine Trägervorrichtung 4.

In diesem Ausführungsbeispiel ist die Trennvorrichtung 17, welche einen Magneten 16 aufweist, hängend am Vorrichtungsrahmen 2 befestigt, wobei durch die Figuren 4a bis 4f unterschiedliche Positionen der Trennvorrichtung 17 gegenüber dem Vorrichtungsrahmen 2 gezeigt sind.

Der Vorrichtungsrahmen 2 verfügt über zwei erste, separate Anlenkpunkte 7, an welchen drehbar die Trägerelemente 6 angeordnet sind.

Die Trägerelemente 6 sind als rohrförmig, einen rechteckigen Querschnitt aufweisende, Trägerstangen umgesetzt, welche einerseits über die ersten Anlenkpunkte 7 mit dem Vorrichtungsrahmen 2 verbunden sind und andererseits über die zweiten Anlenkpunkte 8 mit der Trennvorrichtung 17.

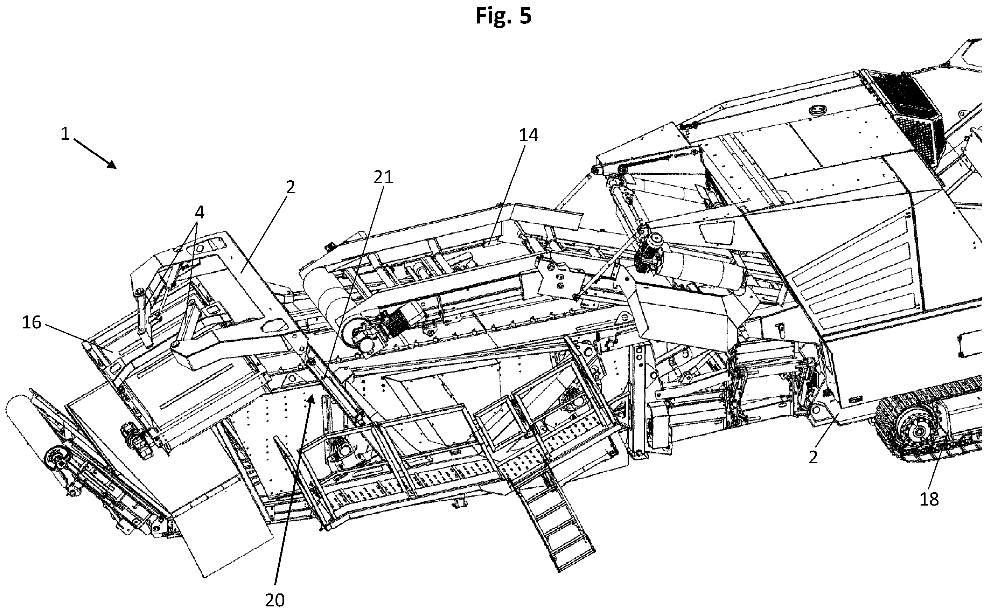

Fig. 5 zeigt das aus Fig. 1 bekannte Ausführungsbeispiel einer mobilen Zerkleinerungsanlage 1 in einem abgesenkten Transportzustand, wobei der hintere Anbaubereich (die Abwurffördereinheit 14) der mobilen Zerkleinerungsanlage 1 um einen Drehpunkt absenkbar ausgebildet ist und durch die mittels Hydraulikzylinder umgesetzte Absenkvorrichtung gemeinsam mit der Anbaukomponente 5 (Trennvorrichtung 17) abgesenkt wurde.

Weiters wurde das Förderband der Abwurffördereinheit 14 ebenfalls um einen Drehpunkt abgekippt, sodass eine zusätzliche Komprimierung der äußeren Abmessungen der Zerkleinerungsanlage 1 vorgenommen wird.

Die Trennvorrichtung 17 (der Magnet 16) wurde gemäß dem Ausführungsbeispiel der Fig. 4a bis 4f über die zwei Trägerelemente 4 zwischen einer Betriebsposition und der in Fig. 5 dargestellten Transportposition verschwenkt.

Somit ist es nicht mehr - wie durch den Stand der Technik bekannt - erforderlich, die Trennvorrichtung 17 extra für den Transport zu demontieren, sondern es kann die Trennvorrichtung 17 auch durch eine Relativbewegung zum Vorrichtungsrahmen 2 auf spezifische Einsatzbedingungen (wie den Transport) angepasst werden.

Weiters wurde die Trennvorrichtung 17 (der Magnet 16) durch die Absenkvorrichtung 20 gegenüber dem Vorrichtungsrahmen 2 abgesenkt (oder anders ausgedrückt: an den Vorrichtungsrahmen 2 angenähert), wodurch zusätzlich die äußere Kontur der Zerkleinerungsanlage 1 gegenüber der Umgebung für den Transport möglichst kompakt verkleinert wird.

Die Absenkvorrichtung 20 ist in diesem Ausführungsbeispiel der Fig. 5 durch zwei zueinander linear verschiebbare - beispielsweise telekopierbare - Rahmenelemente des Rahmens 2 und gesetzt, welche zueinander durch die hydraulischen Kolben-Zylinder-Einheiten 21 bewegbar und vorzugsweise arretierbar sind.

### Bezugszeichenliste:

- 1: mobile Zerkleinerungsanlage
- 2: Vorrichtungsrahmen
- 3: Brechanlage
- 4: Trägervorrichtung
- 5: Anbaukomponente
- 6: Trägerelement
- 7: erster Anlenkpunkt
- 8: zweiter Anlenkpunkt
- 9: Antrieb
- 10: Kolben-Zylinder-Einheit
- 11: Anlenkvorrichtung der Anbaukomponente
- 12: Förderband
- 13: Vorabscheiderfördereinheit
- 14: Abwurffördereinheit
- 15: Beschickungsbehälter
- 16: Magnet
- 17: Trennvorrichtung
- 18: Raupenfahrwerk
- 19: Rahmenlagerelement
- 20: Absenkvorrichtung
- 21: Kolben-Zylinder-Einheit

## Patentansprüche

1. Bewegbare Prozessiervorrichtung zur Prozessierung von Aufgabematerialien, insbesondere mineralischen Materialien, umfassend einen Vorrichtungsrahmen (2) und wenigstens eine Trägervorrichtung (4), welche wenigstens eine Trägervorrichtung (4) wenigstens eine als Vorabscheider-Fördereinheit (13), Abwurffördereinheit oder Trennvorrichtung (17) ausgebildete Anbaukomponente (5) mit dem Vorrichtungsrahmen (2) schwenkbar verbindet, wobei die wenigstens eine Trägervorrichtung (4) wenigstens zwei Trägerelemente (6) aufweist, welche Trägerelemente (6) an zwei separaten ersten Anlenkpunkten (7) mit dem Vorrichtungsrahmen (2) verbunden sind und an zwei separaten zweiten Anlenkpunkten (8) mit der wenigstens einen Anbaukomponente (5) verbunden sind **dadurch gekennzeichnet, dass** durch die wenigstens eine Trägervorrichtung (4) die wenigstens eine Anbaukomponente (5) relativ zum Vorrichtungsrahmen (2) durch verschwenken der wenigstens zwei Trägerelemente (6) mindestens in einem Bereich von 90° quer zu einer Längsachse der wenigstens einen Anbaukomponente (5) verschwenkbar ist

2. Prozessiervorrichtung nach Anspruch 1, wobei die wenigstens zwei Trägerelemente (6), vorzugsweise als einstückige, Verbindungsstangen ausgebildet sind.

3. Prozessiervorrichtung nach einem der vorhergehenden Ansprüche, wobei die zwei separaten ersten Anlenkpunkte (7) als Drehpunkte, vorzugsweise Drehlager, des Vorrichtungsrahmens (2) ausgebildet sind und/oder die zwei separaten zweiten Anlenkpunkte (8) als Drehpunkte, vorzugsweise Drehlager, der wenigstens einen Anbaukomponente (6) ausgebildet sind.

4. Prozessiervorrichtung nach wenigstens einem der vorhergehenden Ansprüche, wobei durch die wenigstens zwei Trägerelemente (6), die wenigstens eine Anbaukomponente (5) und der Vorrichtungsrahmen (2) ein Gelenkviereck gebildet ist.

5. Prozessiervorrichtung nach wenigstens einem der vorhergehenden Ansprüche, wobei die Trägervorrichtung (4) wenigstens einen Antrieb (9) aufweist, welcher dazu ausgebildet ist, eine der wenigstens zwei Trägerelemente (6) gegenüber dem Vorrichtungsrahmen (2) zu verschwenken.

6. Prozessiervorrichtung nach Anspruch 5, wobei der wenigstens eine Antrieb (9), vorzugsweise hydraulische, Kolben-Zylinder-Einheit (10) aufweist.

7. Prozessiervorrichtung nach Anspruch 5 oder 6, wobei der wenigstens eine Antrieb (9) einerseits am Vorrichtungsrahmen (2) und andererseits an zumindest einem der wenigstens zwei Trägerelemente (6) und/oder der Anbaukomponente (5) angelenkt ist.

8. Prozessiervorrichtung nach wenigstens einem der vorhergehenden Ansprüche, wobei durch die wenigstens eine Trägervorrichtung (4) die wenigstens eine Anbaukomponente (5) relativ zum Vorrichtungsrahmen (2) durch verschwenken der wenigstens zwei Trägerelemente (6) mindestens in einem Bereich von 120°, vorzugsweise 180°, quer zur Längsachse der wenigstens einen Anbaukomponente (5) verschwenkbar ist.

9. Prozessiervorrichtung nach wenigstens einem der vorhergehenden Ansprüche, wobei wenigstens eine Arretiervorrichtung, vorzugsweise ein Sperrbolzen, vorgesehen ist, welche dazu ausgebildet ist, die wenigstens eine Anbaukomponente (5) in wenigstens einer Relativposition, vorzugsweise einer Transportposition, relativ zum Vorrichtungsrahmen (2) zu arretieren.

10. Prozessiervorrichtung nach wenigstens einem der vorhergehenden Ansprüche, wobei die wenigstens eine Anbaukomponente (5) eine Anlenkvorrichtung (11), vorzugsweise umfassend ein U-Förmig ausgebildetes Befestigungselement, aufweist, welche Anlenkvorrichtung (11) mit der Anbaukomponente (5) verbunden ist und die zwei zweiten Anlenkpunkte (8) aufweist.

11. Prozessiervorrichtung nach wenigstens einem der vorhergehenden Ansprüche, wobei die Prozessiervorrichtung als Zerkleinerungsanlage (1) zur Zerkleinerung von Aufgabematerialien, insbesondere mineralischen Materialien, ausgebildet ist und der Vorrichtungsrahmen (2) wenigstens eine Brechanlage (3) zur Zerkleinerung der Aufgabematerialien trägt.

12. Prozessiervorrichtung nach Anspruch 11, wobei die wenigstens eine Brechanlage (3) zur Zerkleinerung von Aufgabematerialien einen vom Vorrichtungsrahmen (2) getragenen oder mit diesem verbundenen Backenbrecher, Hammerbrecher und/oder einen Prallbrecher aufweist.

13. Prozessiervorrichtung nach wenigstens einem der vorhergehenden Ansprüche, wobei die wenigstens eine als Vorabscheider-Fördereinheit (13) oder Abwurffördereinheit ausgebildete Anbaukomponente (5), insbesondere einer Zerkleinerungsanlage (1), ein Förderband (12) aufweist.

14. Prozessiervorrichtung nach wenigstens einem der vorhergehenden Ansprüche, wobei die Trägervorrichtung (4), und vorzugsweise zumindest teilweise die Vorabscheider-Fördereinheit (13), unterhalb eines Beschickungsbehälters (15) einer Zerkleinerungsvorrichtung (1) angeordnet ist.

15. Prozessiervorrichtung nach wenigstens einem der vorhergehenden Ansprüche, wobei die wenigstens eine als Trennvorrichtung (17) ausgebildete Anbaukomponente (5) einen Magnet (16) aufweist.

16. Prozessiervorrichtung nach wenigstens einem der vorhergehenden Ansprüche, wobei wenigstens eine Absenkvorrichtung vorgesehen ist, welche dazu ausgebildet ist, die Anbaukomponente (5), vorzugsweise die Trennvorrichtung (17) und/oder den Magneten (16), gegenüber dem Vorrichtungsrahmen (2) abzusenken und/oder an den Vorrichtungsrahmen (2) anzunähern und/oder an den Vorrichtungsrahmen (2) anzulegen.

## Claims

1. A movable processing device for processing feed materials, in particular mineral materials, comprising a device frame (2) and at least one carrier device (4), which at least one carrier device (4) pivotably connects at least one attachment component (5), which is designed as a pre-separator conveyor unit (13), discharge conveyor unit or separating device (17), to the device frame (2), wherein the at least one carrier device (4) has at least two carrier elements (6), which carrier elements (6) are connected to the device frame (2) at two separate first articulation points (7) and are connected to the at least one attachment component (5) at two separate second articulation points (8), **characterized in that** by means of the at least one carrier device (4) the at least one attachment component (5) is pivotable relative to the device frame (2) by pivoting the at least two carrier elements (6) at least in a range of 90° transversely to a longitudinal axis of the at least one attachment component (5).

2. The processing device according to claim 1, wherein the at least two carrier elements (6) are preferably formed as one-piece connecting rods.

3. The processing device according to any one of the preceding claims, wherein the two separate first articulation points (7) are designed as pivot points, preferably pivot bearings, of the device frame (2) and/or the two separate second articulation points (8) are designed as pivot points, preferably pivot bearings, of the at least one attachment component (6).

4. The processing device according to at least one of the preceding claims, wherein a four-bar linkage is formed by the at least two carrier elements (6), the at least one attachment component (5) and the device frame (2).

5. The processing device according to at least one of the preceding claims, wherein the carrier device (4) has at least one drive (9) which is designed to pivot one of the at least two carrier elements (6) relative to the device frame (2).

6. The processing device according to claim 5, wherein the at least one drive (9), has a preferably hydraulic piston-cylinder unit (10).

7. The processing device according to claim 5 or 6, wherein the at least one drive (9) is articulated on the one hand to the device frame (2) and on the other hand to at least one of the at least two carrier elements (6) and/or the attachment component (5).

8. The processing device according to at least one of the preceding claims, wherein by means of the at least one carrier device (4) the at least one attachment component (5) is pivotable relative to the device frame (2) by pivoting the at least two carrier elements (6) at least in a range of 120°, preferably 180°, transversely to the longitudinal axis of the at least one attachment component (5).

9. The processing device according to at least one of the preceding claims, wherein at least one locking device, preferably a locking bolt, is provided, which is designed to lock the at least one attachment component (5) in at least one relative position, preferably a transport position, relative to the device frame (2).

10. The processing device according to at least one of the preceding claims, wherein the at least one attachment component (5) has an articulation device (11), preferably comprising a U-shaped fastening element, which articulation device (11) is connected to the attachment component (5) and has the two second articulation points (8).

11. The processing device according to at least one of the preceding claims, wherein the processing device is designed as a comminution system (1) for comminuting feed materials, in particular mineral materials, and the device frame (2) carries at least one crushing system (3) for comminuting the feed materials.

12. The processing device according to claim 11, wherein the at least one crushing system (3) for comminuting feed materials comprises a jaw crusher, hammer crusher and/or impact crusher supported by or connected to the device frame (2).

13. The processing device according to at least one of the preceding claims, wherein the at least one attachment component (5), which is designed as a pre-separator conveyor unit (13) or discharge conveyor unit, in particular of a comminution system (1), has a conveyor belt (12).

14. The processing device according to at least one of the preceding claims, wherein the carrier device (4), and preferably at least partially the pre-separator conveyor unit (13), is arranged below a feed container (15) of a comminuting device (1).

15. The processing device according to at least one of the preceding claims, wherein the at least one attachment component (5) designed as a separating device (17) has a magnet (16).

16. The processing device according to at least one of the preceding claims, wherein at least one lowering device is provided which is designed to lower the attachment component (5), preferably the separating device (17) and/or the magnet (16), relative to the device frame (2) and/or to bring it closer to the device frame (2) and/or to apply it to the device frame (2).

## Revendications

1. Dispositif de traitement mobile pour le traitement de matériaux d'alimentation, en particulier de matériaux minéraux, comprenant un bâti de dispositif (2) et au moins un dispositif de support (4), ledit au moins un dispositif de support (4) reliant de manière pivotante au bâti de dispositif (2) au moins un composant rapporté (5) réalisé sous la forme d'une unité de convoyage de séparation préalable (13), d'une unité de convoyage d'évacuation ou d'un dispositif de séparation (17), ledit au moins un dispositif de support (4) comportant au moins deux éléments de support (6), lesquels éléments de support (6) sont reliés au bâti de dispositif (2) en deux premiers points d'articulation (7) séparés et sont reliés audit au moins un composant rapporté (5) en deux deuxièmes points d'articulation (8) séparés, **caractérisé en ce que**, au moyen dudit au moins un dispositif de support (4), ledit au moins un composant rapporté (5) peut pivoter, par rapport au bâti (2), par pivotement desdits au moins deux éléments de support (6), au moins sur une plage de 90°, transversalement à un axe longitudinal dudit au moins un composant rapporté (5).

2. Dispositif de traitement selon la revendication 1, dans lequel lesdits au moins deux éléments de support (6) sont réalisés sous la forme de barres de liaison, de préférence d'une seule pièce.

3. Dispositif de traitement selon l'une des revendications précédentes, dans lequel les deux premiers points d'articulation (7) séparés sont réalisés sous la forme de points de rotation, de préférence de paliers rotatifs, du bâti de dispositif (2), et/ou les deux deuxièmes points d'articulation (8) séparés sont réalisés sous la forme de points de rotation, de préférence de paliers rotatifs, dudit au moins un composant rapporté (6).

4. Dispositif de traitement selon au moins l'une des revendications précédentes, dans lequel lesdits au moins deux éléments de support (6), ledit au moins un composant rapporté (5) et le bâti de dispositif (2) forment un quadrilatère articulé.

5. Dispositif de traitement selon au moins l'une des revendications précédentes, dans lequel le dispositif de support (4) comporte au moins un entraînement (9) conçu pour faire pivoter l'un desdits au moins deux éléments de support (6) par rapport au bâti de dispositif (2).

6. Dispositif de traitement selon la revendication 5, dans lequel ledit au moins un entraînement (9) comporte une unité piston-cylindre (10), de préférence hydraulique.

7. Dispositif de traitement selon la revendication 5 ou 6, dans lequel ledit au moins un entraînement (9) est articulé, d'une part, au bâti de dispositif (2) et, d'autre part, à au moins l'un desdits au moins deux éléments de support (6) et/ou au composant rapporté (5).

8. Dispositif de traitement selon au moins l'une des revendications précédentes, dans lequel, au moyen dudit au moins un dispositif de support (4), ledit au moins un composant rapporté (5) peut pivoter par rapport au bâti de dispositif (2), par pivotement desdits au moins deux éléments de support (6), au moins sur une plage de 120°, de préférence de 180°, transversalement à l'axe longitudinal dudit au moins un composant rapporté (5).

9. Dispositif de traitement selon au moins l'une des revendications précédentes, dans lequel il est prévu au moins un dispositif d'immobilisation, de préférence un boulon de blocage, lequel est conçu pour immobiliser ledit au moins un composant rapporté (5) dans au moins une position relative, de préférence une position de transport, par rapport au bâti de dispositif (2).

10. Dispositif de traitement selon au moins l'une des revendications précédentes, dans lequel ledit au moins un composant rapporté (5) comporte un dispositif d'articulation (11) qui comprend de préférence un élément de fixation réalisé en forme de U, lequel dispositif d'articulation (11) est relié au composant rapporté (5) et comporte les deux deuxièmes points d'articulation (8).

11. Dispositif de traitement selon au moins l'une des revendications précédentes, dans lequel le dispositif de traitement est réalisé sous la forme d'une installation de fragmentation (1) pour fragmenter des matériaux d'alimentation, en particulier des matériaux minéraux, et le bâti de dispositif (2) porte au moins une installation de concassage (3) destinée à fragmenter des matériaux d'alimentation.

12. Dispositif de traitement selon la revendication 11, dans lequel ladite au moins une installation de concassage (3) pour fragmenter des matériaux d'alimentation comporte un concasseur à mâchoires, un concasseur à marteaux et/ou un concasseur à percussion porté par le bâti de dispositif (2) ou relié à celui-ci.

13. Dispositif de traitement selon au moins l'une des revendications précédentes, dans lequel ledit au moins un composant rapporté (5), réalisé sous la forme d'une unité de convoyage de séparation préalable (13) ou d'une unité de convoyage d'évacuation, en particulier d'une installation de fragmentation (1), comporte une bande transporteuse (12).

14. Dispositif de traitement selon au moins l'une des revendications précédentes, dans lequel le dispositif de support (4), et de préférence au moins en partie l'unité de convoyage de séparation préalable (13), est disposé au-dessous d'un réservoir d'alimentation (15) d'un dispositif de fragmentation (1).

15. Dispositif de traitement selon au moins l'une des revendications précédentes, dans lequel ledit au moins un composant rapporté (5), réalisé sous la forme d'un dispositif de séparation (17), comporte un aimant (16).

16. Dispositif de traitement selon au moins l'une des revendications précédentes, dans lequel il est prévu au moins un dispositif d'abaissement, lequel est conçu pour abaisser le composant rapporté (5), de préférence le dispositif de séparation (17) et/ou l'aimant (16), par rapport au bâti de dispositif (2), et/ou pour le rapprocher du bâti de dispositif (2), et/ou pour l'appliquer contre le bâti de dispositif (2).
